# EUROPEAN PATENT APPLICATION

(11) **EP 4 474 328 A1**
(43) Date of publication of application: **11.12.2024**
(21) Application number: 24179869.3
(22) Date of filing: 04.06.2024
(51) Int. Cl.: B65H 67/06

(54) **SUPPLY APPARATUS**

(30) Priority: 05.06.2023 JP 2023092573
(71) Applicant: Murata Machinery, Ltd., Kyoto-shi, Kyoto 601-8326 (JP)
(72) Inventor: FURUTANI, Yoshihisa, Kyoto-shi, Kyoto, 612-8686 (JP)
(74) Representative: Hoffmann Eitle

(57) **Abstract**

A supply apparatus includes a transport device and a feeding device. The feeding device includes a transport surface 16 and a guide unit (17). On the transport surface (16), the bobbins (91) to be fed from the housing body to the transport device is moved for transportation. The guide unit (17) 17 is erected from the transport surface (16) and configured to guide the bobbins (91). The guide unit (17) includes a first inclined guide (23) and a second inclined guide (24). The first inclined guide (23) is located on a first side with respect to the center of the transport surface (16) in a width direction, and has an inclined surface configured to move the bobbins (91) inward in the width direction. The second inclined guide (24) located on a second side with respect to the center of the transport surface (16) in the width direction, and has an inclined surface configured to move the bobbins (91) inward in the width direction. In the transport direction, the inclined surfaces of the first inclined guide (23) and the second inclined guide (24) only partially overlap each other or are provided at completely different positions.

## Description

### Technical field

The present invention mainly relates to a supply apparatus for feeding bobbins into a transport device.

### Background Art

Patent Document 1 is JP 2013-6669 A.

Patent Document 1 discloses a yarn supplying bobbin supply apparatus that supplies yarn supplying bobbins housed in a wagon to an automatic winder. The yarn supplying bobbin supply apparatus includes a feeding device. The feeding device rotates the wagon to discharge the yarn supplying bobbins housed in the wagon. Guide plates are provided on both ends of the feeding device in the width direction. The guide plates guide the yarn supplying bobbins discharged from the wagon to prevent the yarn supplying bobbins from falling off in the width direction.

### Summary of Invention

In a configuration in which bobbins are guided by guide plates as described in Patent Document 1, if there is a part having a width narrowing toward the downstream side in the bobbin transport direction, such a part may cause equilibrium of forces of the bobbins on both sides moving inward in the width direction, which may lead to clogging by the bobbins.

The present invention has been made in view of the above circumstances, and a main object of the present invention is to provide a supply apparatus which reduces the risk of clogging by bobbins at a part where the width of a bobbin transport surface is narrow.

The problem to be solved by the present invention is thus described, and next, the means for solving such a problem and the effects thereof will be described.

According to an aspect of the present invention, a supply apparatus having the following configuration is provided. The supply apparatus includes a transport device and a feeding device. The transport device configured to transport bobbins having yarn wound thereon. The feeding device is configured to feed the bobbins from a housing body housing the bobbins, to the transport device. The feeding device includes a transport surface and a guide unit. On the transport surface, the bobbins to be fed from the housing body to the transport device are to be moved for transportation. The guide unit is erected from the transport surface and configured to guide the bobbins. The transport surface has a shape sloping downward toward the downstream side in a transport direction in which the bobbins are transported. The guide unit includes a first inclined guide and a second inclined guide. The first inclined guide is located on a first side with respect to the center of the transport surface in a width direction perpendicular to the transport direction on the transport surface, and has an inclined surface configured to move the bobbins inward in the width direction. In the width direction, the second inclined guide is located on a second side with respect to the center of the transport surface in the width direction, and has an inclined surface configured to move the bobbins inward in the width direction. In the transport direction, the inclined surfaces of the first inclined guide and the second inclined guide only partially overlap each other or are provided at completely different positions.

In this configuration, the ranges in which the first inclined guide and the second inclined guide are provided are not the same in the transport direction. This prevents forces of the bobbins moving inward in the width direction from being balanced, and thus reduces the risk of clogging by the bobbins being transported on the transport surface.

In the supply apparatus, it is preferable that a separation distance in the transport direction between a downstream end of the inclined surface of the first inclined guide in the transport direction and a downstream end of the inclined surface of the second inclined guide in the transport direction is 50 mm or more and 240 mm or less.

This configuration makes it possible to maintain the minimum length required for reducing the risk of clogging by the bobbin, without excessively increasing the size of the device.

The supply apparatus preferably has the following configuration. The first inclined guide includes a first member and a second member. The second member is disposed downstream of the first member in the transport direction. When the first member and the second member are projected onto the transport surface, an angle at which the inclined surface of the first member is inclined relative to the transport direction is different from an angle at which the inclined surface of the second member is inclined relative to the transport direction.

Using two members with inclined surfaces inclined at different angles facilitates achievement of both the effect of reducing the risk of clogging by the bobbins and the effect of preventing the size of the device from excessively increasing.

In the supply apparatus, it is preferable that when the second member and the second inclined guide are projected onto the transport surface, an angle at which the inclined surface of the second member is inclined relative to the transport direction is larger than an angle at which the inclined surface of the second inclined guide is inclined relative to the transport direction.

Since the angle of the inclined surface of the second member is large, the length of the first inclined guide in the transport direction is reduced. Therefore, the length of the range in the transport direction where the first inclined guide is not provided and the second inclined guide is provided can be increased. This further reduces the risk of clogging by the bobbins.

The supply apparatus preferably has the following configuration. When the first member and the second member are projected onto the transport surface, an angle at which the inclined surface of the first member is inclined relative to the transport direction is smaller than an angle at which the inclined surface of the second member is inclined relative to the transport direction. The second member has a space configured to house a part of the first member. The first member is movable relative to the second member so as to enter the space of the second member.

In this configuration, by moving the first member relative to the second member, the shape or size of the first inclined guide can be changed.

In the supply apparatus, it is preferable that, when the second member is projected onto the transport surface, the length of the inclined surface of the second member is 80 mm or more and 200 mm or less.

This configuration makes it possible to appropriately guide the bobbins inward in the width direction, without excessively increasing the size of the device.

The supply apparatus preferably has the following configuration. The feeding device includes a rotating unit configured to rotate together with the transport surface about a horizontal direction. The state of the feeding device is changeable between a preparation state and a feeding state by rotating the rotating unit. The preparation state is a state for setting the housing body. The feeding state is a state in which the height of the transport surface decreases toward the downstream side in the transport direction.

This configuration makes it possible to reduce the risk of clogging by the bobbins when the state of the feeding device is changed from the preparation state to the feeding state.

The supply apparatus preferably has the following configuration. An outer peripheral surface is formed in the rotating unit, and the outer peripheral surface is configured to restrict movement of the bobbins, by preventing the bobbins at an upstream end of the transport device from moving further upstream, when the state of the feeding device is changed from the preparation state to the feeding state. The outer peripheral surface includes a surface being arcuate when the outer peripheral surface is viewed in a direction of a rotation shaft of the rotating unit.

Since the outer peripheral surface includes an arcuate surface, a risk that yarn or the bobbin is trapped between the outer peripheral surface and another member is reduced. Moreover, the risk that the bobbin is caught between the outer peripheral surface and another member is reduced.

### Brief Description of Drawings

FIG. 1 is a perspective view of a supply apparatus according to an embodiment of the present invention.
FIG. 2 is a side view of the supply apparatus in a preparation state.
FIG. 3 is a side view of the supply apparatus in a feeding state.
FIG. 4 illustrates a guide unit as viewed in a direction perpendicular to the transport surface.
FIG. 5 is a perspective view illustrating a configuration of a first side of the guide unit.
FIG. 6 is a diagram illustrating moving the first member relative to the second member.
FIG. 7 is a diagram illustrating movement of bobbins at a guide unit of a comparative example.
FIG. 8 is a diagram illustrating movement of bobbins at the guide unit of the present embodiment.
FIG. 9 illustrates states in which the first inclined guide has been replaced.

### Description of Embodiments

Next, with reference to the drawings, embodiments of the present invention will be described.

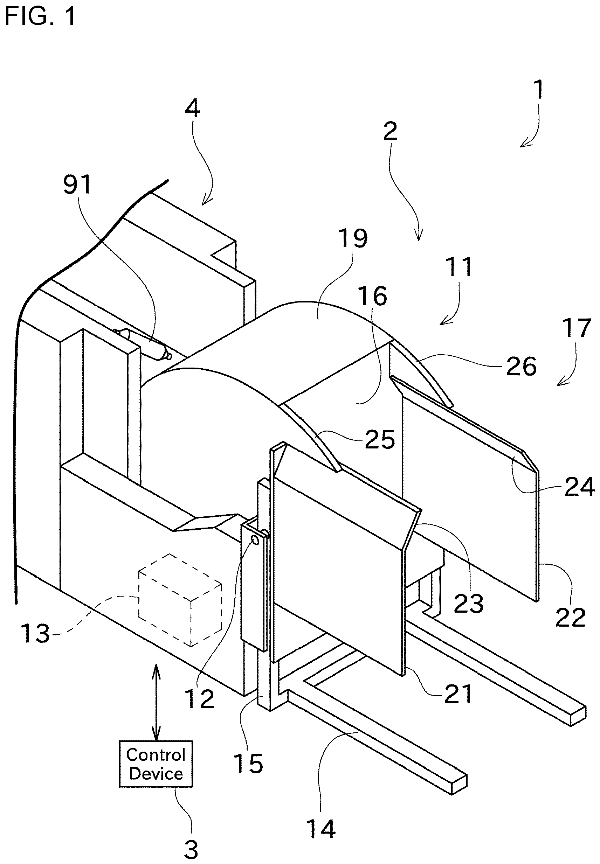

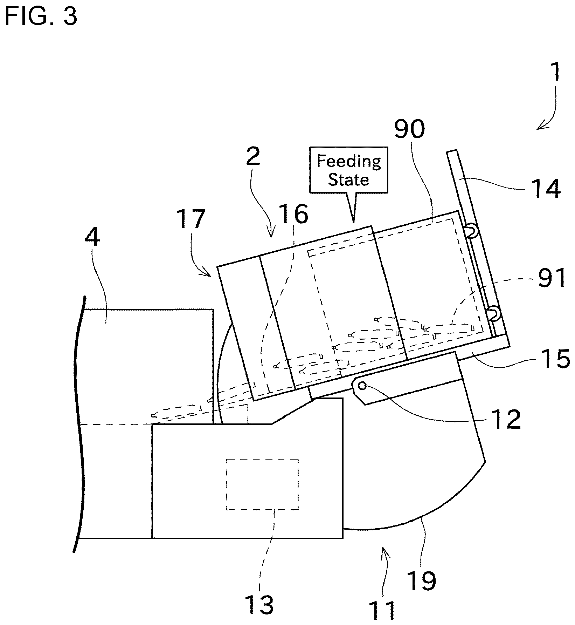

First, an overview of a supply apparatus 1 will be described with reference to FIGS. 1 to 3. The supply apparatus 1 is an apparatus that supplies bobbins 91 around which yarn is wound. The bobbin supplied by the supply apparatus 1 is supplied to a yarn winding machine such as an automatic winder. The yarn winding machine winds the yarn wound around the bobbin to produce a package. As illustrated in FIG. 1, the supply apparatus 1 includes a feeding device 2, a control device 3, and a transport device 4.

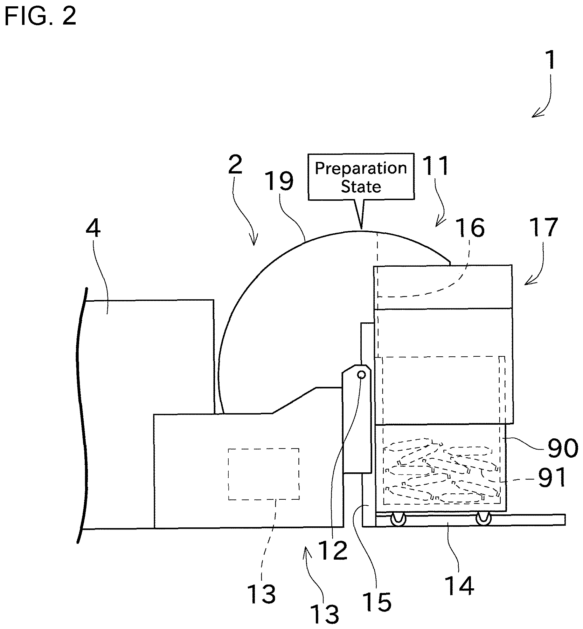

A housing body 90 illustrated in FIG. 2 is set to the feeding device 2. The housing body 90 has a bottom and a plurality of side surfaces erected from the bottom, and a housing space is formed inside them. The bobbins 91 are housed in the housing space of the housing body 90.

The feeding device 2 includes a rotating unit 11, a rotation shaft 12, and a motor 13. The rotating unit 11 is rotatably supported by the rotation shaft 12. The axial direction of the rotation shaft 12 is parallel to the horizontal direction. The motor 13 is an electric motor and generates motive power based on commands from the control device 3. The rotating unit 11 is rotated by the motive power generated by the motor 13.

A first frame 14, a second frame 15, a transport surface 16, and a guide unit 17 are fixed to the rotating unit 11. The first frame 14, the second frame 15, the transport surface 16, and the guide unit 17 rotate together with the rotating unit 11. The housing body 90 is set to the first frame 14 and the second frame 15. The transport surface 16 is a surface on which the bobbins 91 supplied from the housing body 90 are moved for transportation to the transport device 4. The guide unit 17 guides the bobbins 91 moving on the transport surface 16.

By rotating the rotating unit 11, the state of the feeding device 2 is changeable between a preparation state and a feeding state. The preparation state is a state for setting the housing body 90 to the first frame 14 and the second frame 15. The feeding state is a state for feeding the bobbins 91. In the feeding state, the height of the transport surface 16 decreases toward the downstream side in the transport direction, and thus the bobbins 91 move along the transport surface 16 by their own weight.

The rotating unit 11 further includes an outer peripheral surface 19. The outer peripheral surface 19 is a surface including an arcuate portion when the rotating unit 11 is viewed in the axial direction of the rotation shaft 12. The outer peripheral surface 19 is formed downstream of the transport surface 16 in the transport direction (downstream in the direction of rotation for changing from the preparation state to the feeding state). When the state of the feeding device 2 is changed from the preparation state to the feeding state, the outer peripheral surface 19 restricts movement of the bobbins 91, by preventing the bobbins 91 at the upstream end of the transport device 4 from reaching a further upstream area (specifically, a space for rotating the rotating unit 11).

The outer peripheral surface 19 is formed by bending a plate material. The bending process is, for example, roll bending using a plurality of rollers to bend a plate material. Further, the number of arcuate plates forming the outer peripheral surface 19 may be one or more. When the outer peripheral surface 19 is formed by a plurality of arcuate plates, the arcuate plates are joined together. Furthermore, a gap may be formed at a joint between the arcuate plates. At least a part of the gap between the arcuate plates may be covered with a cover member. This reduces a risk that the yarn or the bobbin 91 is trapped by the gap between the arcuate plates. Moreover, a risk that the bobbin 91 is caught between the outer peripheral surface 19 and another member is further reduced. Further, the cover member is provided so as to extend from one to the other of the adjacent arcuate plates. It is further preferable that the cover member is provided so as to extend from an arcuate plate located downstream in the direction of rotation of the rotating unit 11 for changing from the preparation state to the feeding state, toward an arcuate plate located upstream. This reduces a risk that the yarn or bobbin 91 is caught between the cover member and the upstream end of the transport device 4. Note that the cover member is not an essential component and can be omitted. Furthermore, the position, range and orientation of the cover member can also be changed as appropriate. A part of the arcuate plate may serve as a cover member.

The outer peripheral surface 19 does not need to be entirely arcuate, and the outer peripheral surface 19 may be partly arcuate. Specifically, it is only required that at least a part that comes closest to the transport device 4 when the state of the feeding device 2 is changed from the preparation state to the feeding state, has an arc shape.

Since the outer peripheral surface 19 has an arcuate surface, a risk that yarn or the bobbins 91 is trapped by the outer peripheral surface 19 is reduced. Therefore, the bobbin 91 that comes into contact with the outer peripheral surface 19 can be smoothly guided downstream. Note that the outer peripheral surface 19 having an arc shape is merely an example, and the outer peripheral surface 19 may have a polygonal shape when viewed in the axial direction of the rotation shaft 12. The polygonal outer peripheral surface 19 can be formed by forming a plurality of V-bends in the plate material.

The feeding device 2 of the present embodiment rotates to supply the bobbins 91 to the transport device 4. Alternatively, the feeding device 2 may supply the bobbins 91 to the transport device 4 by using a slope or a conveyor instead of rotating.

The control device 3 includes an arithmetic unit such as a CPU, a RAM, and a storage. The storage is an HDD, an SSD, a flash memory, or the like. Programs related to the supply apparatus 1 and data such as a condition necessary for executing the programs are stored in the storage. The arithmetic unit reads a program stored in the storage to the RAM and executes the program. In this way, the control device 3 performs various controls of the supply apparatus 1 (for example, control to change the state of the feeding device 2).

The transport device 4 transports, to the yarn winding machine, the bobbins 91 fed by the feeding device 2. The transport device 4 transports the bobbins 91 using, for example, a slope, a conveyor, a pressing member, or the like.

Next, the guide unit 17 will be described in detail.

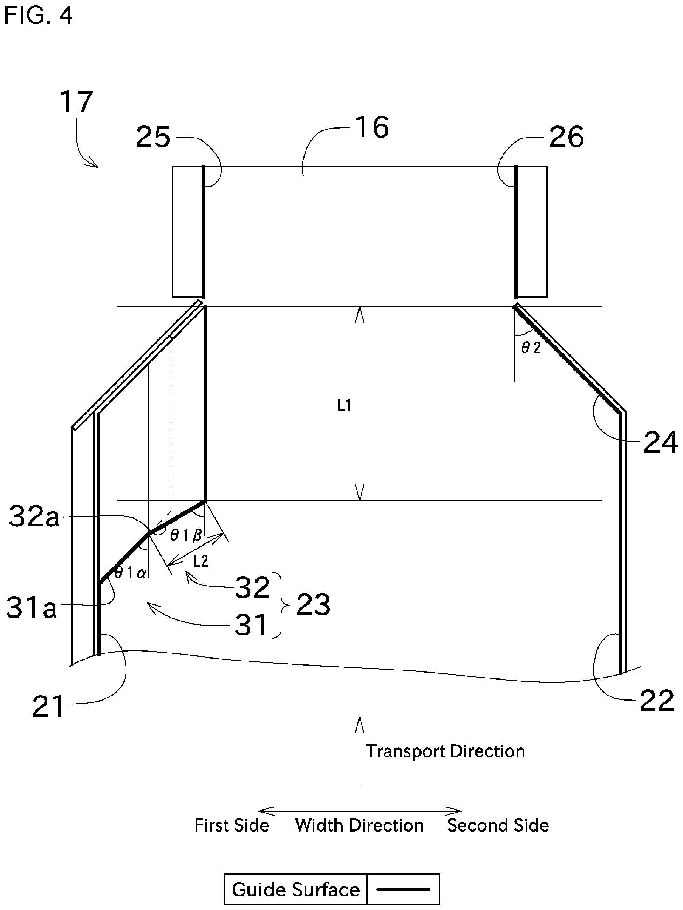

In the following description, the direction in which the bobbin 91 is transported by the transport surface 16 will be simply referred to as a transport direction. Although the bobbin 91 may actually be transported along a meandering path, a direction along a transport path when not taking such meandering into account corresponds to the transport direction. Further, a direction perpendicular to the transport direction on the transport surface 16 is referred to as a width direction. FIG. 4 is a diagram as viewed in a direction perpendicular to the transport direction. Therefore, FIG. 4 illustrates a positional relationship when parts of the guide unit 17 are projected onto the transport surface 16. A positional relationship between parts of the guide unit 17 described in the following refers to a positional relationship when projected onto the transport surface 16 unless otherwise mentioned.

The guide unit 17 is erected vertically or diagonally from the transport surface 16 and guides the bobbin 91. "Guide" means to contact the bobbin 91 and adjust the position of the bobbin 91 to prevent the bobbin 91 from falling off from the transport surface 16 in the width direction or to move the bobbin 91 downstream. Each guide has a surface that comes into contact with the bobbin 91 to guide the bobbin 91, and the surface is referred to as a guide surface. As illustrated in FIG. 4, the guide unit 17 includes a first parallel guide 21, a second parallel guide 22, a first inclined guide 23, a second inclined guide 24, a first downstream guide 25, and a second downstream guide 26.

The first parallel guide 21 is provided on a first side with respect to the center in the width direction (specifically, at an end on the first side in the width direction). The second parallel guide 22 is provided on a second side with respect to the center in the width direction (specifically, at an end on the second side in the width direction). The first parallel guide 21 and the second parallel guide 22 partially overlap each other in the transport direction. In terms of a positional relationship, the first side and the second side in the width direction are opposite sides of the center in the width direction of the transport surface 16.

The guide surface of the first parallel guide 21 and the guide surface of the second parallel guide 22 are parallel. Therefore, in the range where the first parallel guide 21 and the second parallel guide 22 are provided, the length of the transport surface 16 in the width direction is constant. The first parallel guide 21 and the second parallel guide 22 are plate members attached to the transport surface 16. However, the first parallel guide 21 and the second parallel guide 22 may be a block-shaped member or a member having another shape.

The first inclined guide 23 and the second inclined guide 24 are provided downstream of the first parallel guide 21 and the second parallel guide 22 in the transport direction. The first inclined guide 23 is provided on the first side with respect to the center in the width direction (specifically, near the end on the first side in the width direction). The second inclined guide 24 is provided on the second side with respect to the center in the width direction (specifically, at the end on the second side in the width direction). In the transport direction, the second inclined guide 24 is provided downstream of the range in which the first inclined guide 23 is provided. Thus, the first inclined guide 23 and the second inclined guide 24 are provided at completely different positions in the transport direction (that is, there is no overlap at all). Note that the first inclined guide 23 and the second inclined guide 24 may only partially overlap each other in the transport direction. In other words, the ranges in which the first inclined guide 23 and the second inclined guide 24 are provided are not perfectly the same. Therefore, the guide surface of the first inclined guide 23 and the guide surface of the second inclined guide 24 are asymmetrical relative to an imaginary line passing through the center in the width direction.

The first inclined guide 23 and the second inclined guide 24 include portions that are inclined to move the bobbins 91 inward in the width direction. In other words, the guide surface of the first inclined guide 23 includes a portion that approaches the second side as it approaches the downstream side. The guide surface of the second inclined guide 24 includes a portion that approaches the first side as it approaches the downstream side. The first inclined guide 23 includes a first member 31 and a second member 32, which are block-shaped (box-shaped) members. The second inclined guide 24 is a plate member attached to the transport surface 16.

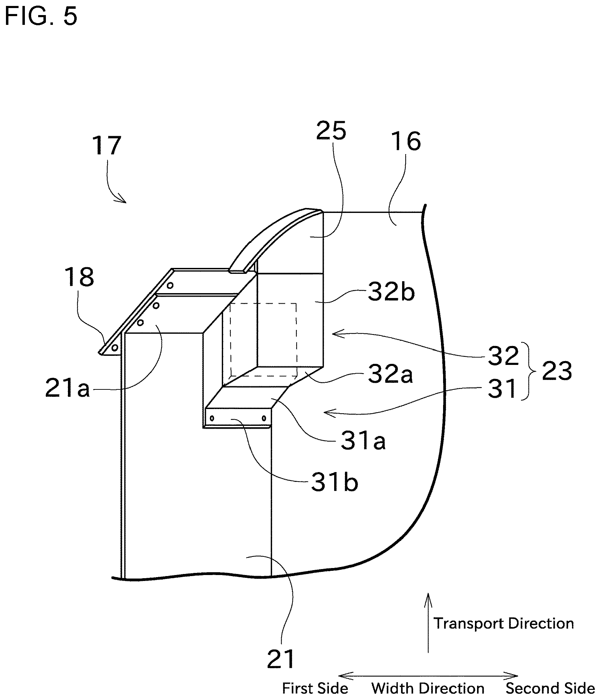

The configuration of the first inclined guide 23 will be described in more detail. As illustrated in FIG. 5, the first member 31 includes a first inclined surface 31a, which is the guide surface, and an attachment portion 31b. The attachment portion 31b is attached to the first parallel guide 21 using a fastener such as a bolt. The second member 32 includes a second inclined surface 32a and a parallel surface 32b, which are the guide surfaces. The parallel surface 32b is a surface parallel to the transport direction. Further, the second member 32 has a housing space formed therein and can house a part of the first member 31.

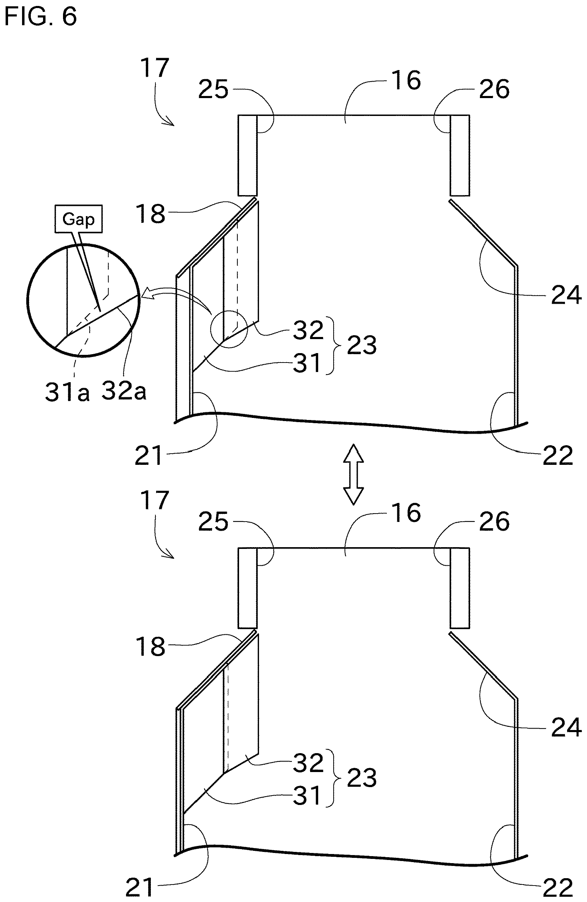

An attachment surface 21a is provided at a downstream end of the first parallel guide 21 in the transport direction. The attachment surface 21a is attached to a support plate 18. A plurality of attachment holes are formed in the support plate 18, and the attachment position can be changed by using a different attachment hole for attaching the attachment surface 21a. On the other hand, the second member 32 is fixed to the support plate 18, the transport surface 16, or the like, and the second member 32 does not move even if the first member 31 is moved. Thus, the position of the first member 31 relative to the second member 32 is changeable. As a result, as illustrated in FIG. 6, the length of the first inclined surface 31a functioning as a guide surface and the length of the transport surface 16 in the width direction are changeable. For example, an appropriate guide shape can be realized by changing the position of the first member 31 relative to the second member 32 depending on the shape, length, quantity, etc. of the bobbins 91 to be transported.

The shapes of the first member 31 and the second member 32 are merely examples, and are not limited to the examples illustrated in the present embodiment. For example, a housing space may be formed in the first member 31, and the second member 32 may be housed in the housing space of the first member 31. Further, the housing space may not be formed in either the first member 31 or the second member 32. Alternatively, the first inclined guide 23 may be a single component instead of being divided into the first member 31 and the second member 32.

The first downstream guide 25 and the second downstream guide 26 are provided downstream of the first inclined guide 23 and the second inclined guide 24 in the transport direction. The first downstream guide 25 is provided on the first side with respect to the center in the width direction (specifically, at the end on the first side in the width direction). The second downstream guide 26 is provided on the second side with respect to the center in the width direction (specifically, at the end on the second side in the width direction). The first downstream guide 25 and the second downstream guide 26 overlap each other in the transport direction.

The guide surface of the first downstream guide 25 and the guide surface of the second downstream guide 26 are parallel. Therefore, in the range where the first downstream guide 25 and the second downstream guide 26 are provided, the length of the transport surface 16 in the width direction is constant. The first downstream guide 25 and the second downstream guide 26 are plate members attached to the transport surface 16. However, the first downstream guide 25 and the second downstream guide 26 may be a block-shaped member or a member having another shape.

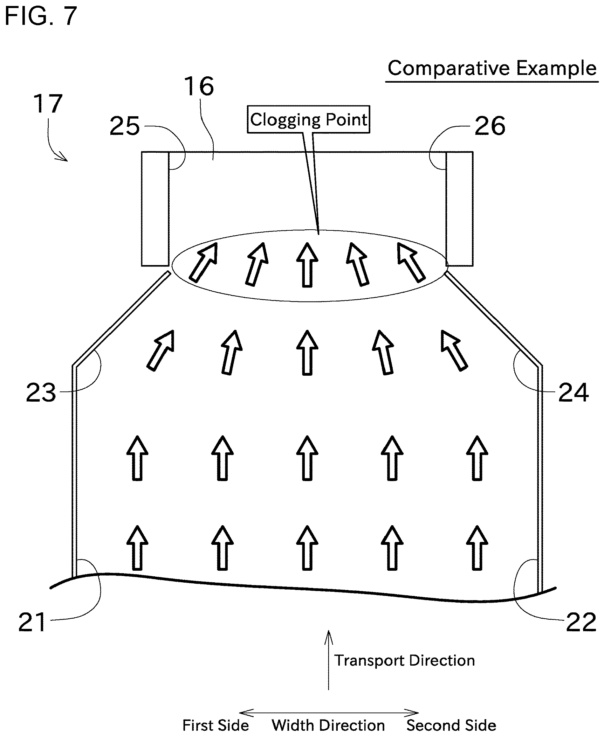

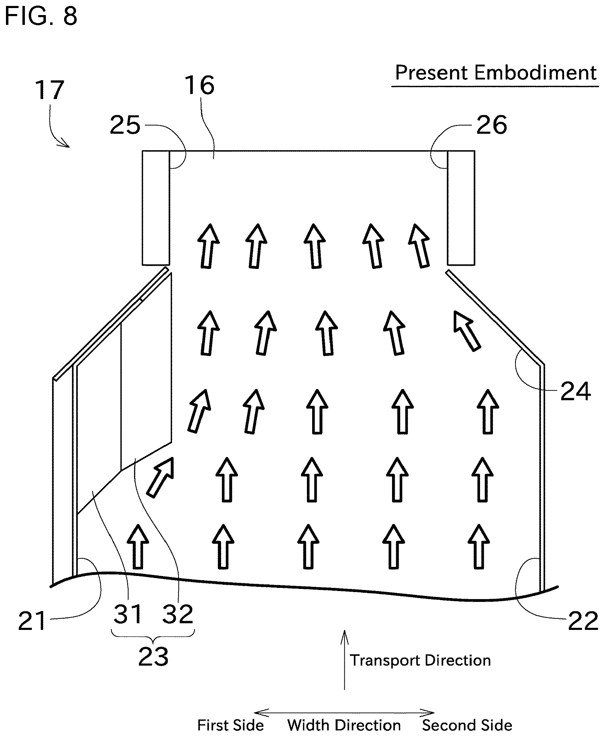

Next, with reference to FIGS. 7 and 8, the guide unit 17 of a comparative example and the guide unit 17 of the present embodiment will be compared in terms of clogging by the bobbins 91.

The guide unit 17 of the comparative example illustrated in FIG. 7 has a shape that is symmetrical with respect to an imaginary line passing through the center in the width direction. In the comparative example, when the bobbins 91 pass through a part in which the first inclined guide 23 and the second inclined guide 24 are provided, the bobbins 91 on both sides in the width direction are moved to the center in the width direction. This may cause equilibrium of forces of the bobbins on both sides moving inward in the width direction, and increases the risk of clogging by the bobbins 91 at and around a clogging point illustrated in FIG. 7.

In contrast, in the present embodiment, the first inclined guide 23 moves the bobbins 91 on the first side to the center in the width direction, before the second inclined guide 24 moves the bobbins 91 on the second side to the center in the width direction. This is because, in the guide unit 17 of the present embodiment, the first inclined guide 23 and the second inclined guide 24 do not overlap in the transport direction. Therefore, in the present embodiment, it is possible to avoid a situation in which the bobbins 91 on both sides in the width direction move to the center in the width direction at the same point in the transport direction. Therefore, the risk of clogging by the bobbins 91 is reduced. As a result, the frequency with which the feeding device 2 stops is reduced, and the frequency of eliminating clogging by the bobbins 91 by an operator is reduced.

Note that even when the first inclined guide 23 and the second inclined guide 24 only partially overlap each other in the transport direction, it is possible to achieve the effect of reducing the risk of clogging by the bobbins 91 compared to the guide unit 17 of the comparative example.

Next, with reference to FIG. 4, a preferred size and an angle of each part of the guide unit 17 will be described. Note that the sizes and angles described below are merely examples, and may deviate from preferred examples.

In order to highly exhibit the above-mentioned effects, it is preferable that the positions of the first inclined guide 23 and the second inclined guide 24 in the transport direction are significantly different. A separation distance L1, which is an index for this purpose, will be described. As illustrated in FIG. 4, the separation distance L1 is a separation distance in the transport direction between the downstream end of the inclined surface of the first inclined guide 23 in the transport direction and the downstream end of the inclined surface of the second inclined guide 24 in the transport direction. A longer separation distance reduces the risk of clogging by the bobbins 91, but increases the size of the device. Considering these respects and the size of the bobbin 91, the separation distance L1 is preferably 50 mm or more and 240 mm or less.

Next, a length L2 of the second inclined surface 32a will be described. A longer length L2 is preferable in terms of moving the bobbins 91 inward in the width direction, particularly in terms of gradually changing the orientations of the bobbins 91. However, an excessively long length L2 results in increase in the size of the device. Considering these respects and the size of the bobbin 91, the length L2 is preferably 80 mm or more and 200 mm or less.

Next, the inclination angles of the first member 31 and the second member 32 will be described. The inclination angles of the first inclined guide 23 and the second inclined guide 24 are inclination angles (acute angles) relative to the transport direction when the first inclined guide 23 and the second inclined guide 24 are projected onto the transport surface 16. The inclination angle of the first inclined surface 31a of the first member 31 is an angle θ1α, the inclination angle of the second inclined surface 32a of the second member 32 is an angle θ1β, and the inclination angle of the inclined surface (guide surface) of the second inclined guide 24 is an angle θ2. The angle θ1α is smaller than the angle θ1β. Thereby, when the first member 31 is moved relative to the second member 32, interference between the first member 31 and the second member 32 is avoided. Further, the angle θ1β is larger than the angle θ2. Using the larger angle θ1β results in decrease in the length of the first inclined guide 23 in the transport direction. Thus, using the larger angle θ1β increases the separation distance L1 when the guide unit 17 having a predetermined length in the transport direction must be used. As a result, as described above, the effect of reducing the risk of clogging by the bobbin 91 can be achieved.

Further, when the angle θ1α and the angle θ1β are different, moving the first member 31 relative to the second member 32 creates a gap in the overlapping range of the first inclined surface 31a and the second inclined surface 32a (FIG. 6). In the present embodiment, since the angle θ1α is smaller than the angle θ1β, this gap can be located inside the second member 32. Therefore, the bobbin 91 can not enter the gap. Further, even in a case where the second member 32 enters the housing space of the first member 31, the gap can be located inside the first member 31 because the angle θ1α is smaller than the angle θ1β. Also from this point of view, it is preferable that the angle θ1α is smaller than the angle θ1β.

Note that the magnitude relationship between the angle θ1α and the angle θ1β is an example, and the angle θ1α and the angle θ1β may be the same. In this case, the second member 32 may be housed in the housing space of the first member 31, or the first member 31 may be housed in the housing space of the second member 32. From the viewpoint of preventing the bobbins 91 being transported from being trapped, it is preferable that the second member 32 is housed in the housing space of the first member 31. Note that the angle θ1α may be larger than the angle θ1β.

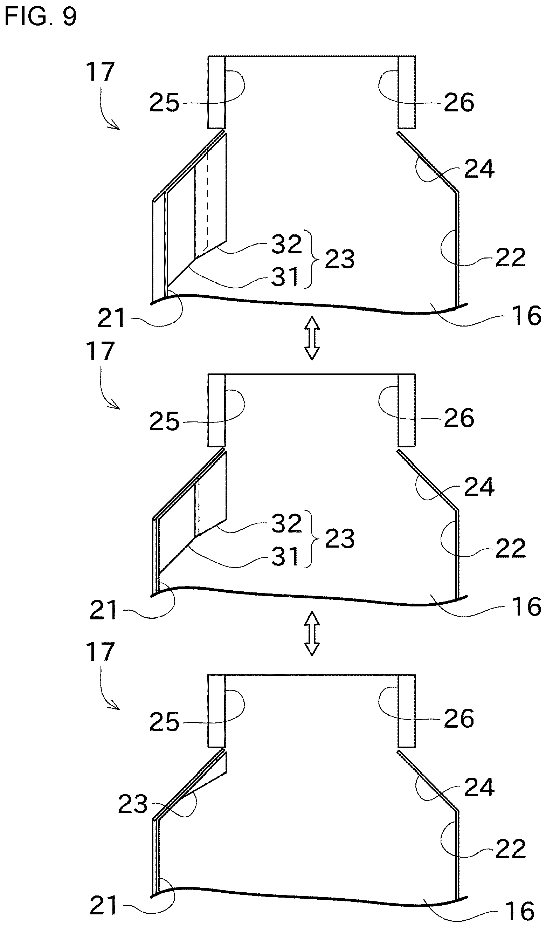

Next, with reference to FIG. 9, replacement of the first inclined guide 23 will be described.

As described above, by moving the first member 31 relative to the second member 32 depending on the length of the bobbin 91, etc., an appropriate size of the guide unit 17 can be realized. However, since the position of the second member 32 is fixed, there is a limit to the amount of movement of the first member 31. Therefore, by employing a configuration in which the first inclined guide 23 is replaceable, it is possible to adapt to more diverse conditions.

Each of the first inclined guides 23 has a different shape of the first member 31 or the second member 32, or different members forming the first inclined guide 23. For example, the length of the first member 31 in the transport direction, the length of the second member 32 in the transport direction, the angle θ1α, or the angle θ1β is different. As illustrated in the bottom diagram of FIG. 9, the first inclined guide 23 may be formed by a single component. These first inclined guides 23 have the same structure for attachment to the rotating unit 11.

As described above, the supply apparatus 1 of the present embodiment includes the transport device 4 and the feeding device 2. The transport device 4 transports the bobbins 91 having yarn wound thereon. The feeding device 2 feeds the bobbins 91 from the housing body 90 housing the bobbins 91, to the transport device 4. The feeding device 2 includes the transport surface 16 and the guide unit 17. On the transport surface 16, the bobbins 91 to be fed from the housing body 90 to the transport device 4 is moved for transportation. The guide unit 17 is erected from the transport surface 16 and configured to guide the bobbins 91. The transport surface 16 has a shape sloping downward toward the downstream side in the transport direction in which the bobbins 91 are transported. The guide unit 17 includes the first inclined guide 23 and the second inclined guide 24. The first inclined guide 23 is located on a first side with respect to the center of the transport surface 16 in the width direction perpendicular to the transport direction on the transport surface 16, and has an inclined surface (the first inclined surface 31a and the second inclined surface 32a) configured to move the bobbins 91 inward in the width direction. In the width direction, the second inclined guide 24 is located on a second side with respect to the center of the transport surface 16 in the width direction, and has an inclined surface configured to move the bobbins 91 inward in the width direction. In the transport direction, the inclined surfaces of the first inclined guide 23 and the second inclined guide 24 only partially overlap each other or are provided at completely different positions.

In this configuration, the ranges in which the first inclined guide 23 and the second inclined guide 24 are provided are not the same in the transport direction. This prevents forces of the bobbins 91 moving inward in the width direction from being balanced, and thus reduces the risk of clogging by the bobbins being transported on the transport surface.

In the supply apparatus 1 of the present embodiment, the separation distance L1 in the transport direction between the downstream end of the inclined surface of the first inclined guide 23 in the transport direction and the downstream end of the inclined surface of the second inclined guide 24 in the transport direction is 50 mm or more and 240 mm or less.

This configuration makes it possible to maintain the minimum length required for reducing the risk of clogging by the bobbins 91, without excessively increasing the size of the device.

In the supply apparatus 1 of the present embodiment, the first inclined guide 23 includes the first member 31 and the second member 32. The second member 32 is disposed downstream of the first member 31 in the transport direction. When the first member 31 and the second member 32 are projected onto the transport surface 16, the angle θ1α at which the first inclined surface 31a of the first member 31 is inclined relative to the transport direction is different from the angle θ1β at which the second inclined surface 32a of the second member 32 is inclined relative to the transport direction.

Using two members with inclined surfaces inclined at different angles facilitates achievement of both the effect of reducing the risk of clogging by the bobbins 91 and the effect of preventing the size of the device from excessively increasing.

In the supply apparatus 1 of the present embodiment, when the second member 32 and the second inclined guide 24 are projected onto the transport surface 16, the angle θ1β at which the second inclined surface 32a of the second member 32 is inclined relative to the transport direction is larger than the angle θ2 at which the inclined surface of the second inclined guide 24 is inclined relative to the transport direction.

Since the angle of the second inclined surface 32a of the second member 32 is large, the length of the first inclined guide 23 in the transport direction is reduced. Therefore, the length of the range in the transport direction where the first inclined guide 23 is not provided and the second inclined guide 24 is provided can be increased. This further reduces the risk of clogging by the bobbins 91.

In the supply apparatus 1 of the present embodiment, when the first member 31 and the second member 32 are projected onto the transport surface 16, the angle θ1α at which the first inclined surface 31a of the first member 31 is inclined relative to the transport direction is smaller than angle θ1β at which the second inclined surface 32a of the second member 32 is inclined relative to the transport direction. The second member 32 has a space that can house a part of the first member 31. The first member 31 is movable relative to the second member 32 so as to enter the space of the second member 32.

In this configuration, by moving the first member 31 relative to the second member 32, the shape or size of the first inclined guide 23 can be changed.

In the supply apparatus 1 of the present embodiment, when the second member 32 is projected onto the transport surface 16, the length L2 of the second inclined surface 32a of the second member 32 is 80 mm or more and 200 mm or less.

This configuration makes it possible to appropriately guide the bobbins 91 inward in the width direction, without excessively increasing the size of the device.

In the supply apparatus 1 of the present embodiment, the feeding device 2 includes the rotating unit 11 configured to rotate together with the transport surface 16 about a horizontal direction. The state of the feeding device 2 is changeable between the preparation state and the feeding state by rotating the rotating unit 11. The preparation state is a state for setting the housing body 90. The feeding state is a state in which the height of the transport surface 16 decreases toward the downstream side in the transport direction.

This configuration makes it possible to reduce the risk of clogging by the bobbins 91 when the state of the feeding device is changed from the preparation state to the feeding state.

In the supply apparatus 1 of the present embodiment, the outer peripheral surface 19 is formed in the rotating unit 11, and the outer peripheral surface 19 restricts movement of the bobbins 91, by preventing the bobbins 91 at the upstream end of the transport device 4 from moving further upstream, when the state of the feeding device 2 is changed from the preparation state to the feeding state. The outer peripheral surface 19 includes the parallel surface 32b that is arcuate when the outer peripheral surface 19 is viewed in the direction of the rotation shaft 12 of the rotating unit 11.

Since the outer peripheral surface 19 includes an arcuate surface, a risk that yarn or the bobbin 91 is trapped between the outer peripheral surface 19 and another member (for example, the upstream end of the transport device 4) is reduced. Moreover, the risk that the bobbin 91 is caught between the outer peripheral surface 19 and another member is reduced.

## Claims

1. A supply apparatus (1), comprising:
a transport device (4) configured to transport bobbins (91) having yarn wound thereon; and
a feeding device (2) configured to feed the bobbins (91) from a housing body housing the bobbins (91), to the transport device (4), wherein
the feeding device (2) includes,
a transport surface (16) on which the bobbins (91) to be fed from the housing body to the transport device (4) are to be moved for transportation, and
a guide unit (17) erected from the transport surface (16) and configured to guide the bobbins (91),
the transport surface (16) has a shape sloping downward toward the downstream side in a transport direction in which the bobbins (91) are transported,
the guide unit (17) includes,
a first inclined guide (23) located on a first side with respect to the center of the transport surface (16) in a width direction perpendicular to the transport direction on the transport surface (16), the first inclined guide (23) having an inclined surface (31a, 32a) configured to move the bobbins (91) inward in the width direction, and
a second inclined guide (24) located on a second side with respect to the center of the transport surface (16) in the width direction, the second inclined guide (24) having an inclined surface configured to move the bobbins (91) inward in the width direction, and
in the transport direction, the inclined surfaces (31a, 32a) of the first inclined guide (23) and the second inclined guide (24) only partially overlap each other or are provided at completely different positions.

2. The supply apparatus (1) according to claim 1, wherein
a separation distance in the transport direction between a downstream end of the inclined surface (31a, 32a) of the first inclined guide (23) in the transport direction and a downstream end of the inclined surface of the second inclined guide (24) in the transport direction is 50 mm or more and 240 mm or less.

3. The supply apparatus (1) according to claim 1 or 2, wherein
the first inclined guide (23) includes,
a first member (31), and
a second member (32) disposed downstream of the first member (31) in the transport direction, and
when the first member (31) and the second member (32) are projected onto the transport surface (16), an angle at which the inclined surface (31a) of the first member (31) is inclined relative to the transport direction is different from an angle at which the inclined surface (32a) of the second member (32) is inclined relative to the transport direction.

4. The supply apparatus (1) according to claim 3, wherein
when the second member and the second inclined guide (24) are projected onto the transport surface (16), an angle at which the inclined surface (32a) of the second member (32) is inclined relative to the transport direction is larger than an angle at which the inclined surface of the second inclined guide (24) is inclined relative to the transport direction.

5. The supply apparatus (1) according to claim 3 or 4, wherein
when the first member (31) and the second member (32) are projected onto the transport surface (16), an angle at which the inclined surface (31a) of the first member (31) is inclined relative to the transport direction is smaller than an angle at which the inclined surface (32a) of the second member (32) is inclined relative to the transport direction,
the second member (32) has a space configured to house a part of the first member (31), and
the first member (31) is movable relative to the second member (32) so as to enter the space of the second member (32).

6. The supply apparatus (1) according to any one of claims 3 to 5, wherein
when the second member (32) is projected onto the transport surface (16), the length of the inclined surface of the second member (32) is 80 mm or more and 200 mm or less.

7. The supply apparatus (1) according to any one of claims 1 to 6, wherein
the feeding device (2) includes a rotating unit (11) configured to rotate together with the transport surface (16) about a horizontal direction,
the state of the feeding device (2) is changeable between a preparation state and a feeding state by rotating the rotating unit (11),
the preparation state is a state for setting the housing body (90), and
the feeding state is a state in which the height of the transport surface (16) decreases toward the downstream side in the transport direction.

8. The supply apparatus (1) according to claim 7, wherein
an outer peripheral surface (19) is formed in the rotating unit (11), and the outer peripheral surface (19) is configured to restrict movement of the bobbins (91), by preventing the bobbins (91) at an upstream end of the transport device (4) from moving further upstream, when the state of the feeding device (2) is changed from the preparation state to the feeding state, and
the outer peripheral surface (19) includes a surface being arcuate when the outer peripheral surface is viewed in a direction of a rotation shaft (12) of the rotating unit (11).
